Europäisches Patentamt

European Patent Office

Office européen des brevets

(19)

(11) EP 0 817 698 B1

(12) **EUROPÄISCHE PATENTSCHRIFT**

(45) Veröffentlichungstag und Bekanntmachung des Hinweises auf die Patenterteilung:
**05.09.2001 Patentblatt 2001/36**

(21) Anmeldenummer: 95942730.3

(22) Anmeldetag: **22.12.1995**

(51) Int Cl.[7]: **B23Q 3/06**, B23K 26/00

(86) Internationale Anmeldenummer:
**PCT/EP95/05108**

(87) Internationale Veröffentlichungsnummer:
**WO 96/30160 (03.10.1996 Gazette 1996/44)**

(54) **VERFAHREN ZUM KONTINUIERLICHEN STUMPFNAHTSCHWEISSEN VON BLECHTAFELN, INSBESONDERE IM KAROSSERIEBAU DER KFZ-INDUSTRIE, UND VORRICHTUNG ZUM DURCHFÜHREN DIESES VERFAHRENS**

CONTINUOUS BUTT-WELDING PROCESS AND DEVICE FOR METAL SHEETS, IN PARTICULAR FOR BUILDING CAR BODIES IN THE CAR INDUSTRY

PROCEDE ET DISPOSITIF DE SOUDAGE BORD A BORD EN CONTINU DE FEUILLES DE TOLES, NOTAMMENT POUR LA CONSTRUCTION DE CARROSSERIES DANS L'INDUSTRIE AUTOMOBILE

(84) Benannte Vertragsstaaten:
**AT BE CH DE ES FR GB IT LI NL SE**

(30) Priorität: **25.03.1995 DE 19511098**

(43) Veröffentlichungstag der Anmeldung:
**14.01.1998 Patentblatt 1998/03**

(73) Patentinhaber: **Thyssen Krupp Industries AG**
**45128 Essen (DE)**

(72) Erfinder:
• **ALBER, Gerhard**
**D-88213 Ravensburg (DE)**

• **NEUROHR, Gerhard**
**D-66687 Wadern (DE)**

(74) Vertreter: **Dahlkamp, Heinrich-Leo, Dipl.-Ing.**
**ThyssenKrupp Technologies AG**
**VRP Patente**
**Am Thyssenhaus 1**
**45128 Essen (DE)**

(56) Entgegenhaltungen:
DE-A- 3 830 892        US-A- 5 328 083
US-A- 5 364 006

**Beschreibung**

Die Erfindung betrifft ein Verfahren zum kontinuierlichen Stumpfnahtschweißen von Blechtafeln, insbesondere im Karosseriebau der Kfz-Industrie, gemäß Oberbegriff des Anspruchs 1. Des weiteren betrifft sie eine Vorrichtung zum Durchführen des vorbeschriebenen kontinuierlichen Stumpfnahtschweißverfahrens gemäß Oberbegriff des Anspruchs 3.

Bei herkömmlichen Schweißverfahren, insbesondere beim Strahlschweißen (Elektronenstrahlschweißen, Laserschweißen), gibt es zwei bekannte Methoden:

a) Blechtafeln werden zu einem beweglichen Strahlwerkzeug exakt positioniert, gespannt und verschweißt. Bei diesem Verfahren wird nicht kontinuierlich geschweißt.

b) Blechtafeln werden aus zueinander verschränkten Ebenen kommend an mechanischen, hochpräzisen Leitlinealen einem stehenden Strahlwerkzeug zugeführt und verschweißt. Bei diesem Verfahren werden die Blechtafeln durchlaufend geschweißt.

Beide Methoden bedeuten einen erheblichen Aufwand zur Erzeugung der erforderlichen mechanischen Präzision (ca. 0,03 mm Spaltbreite) und sind problematisch hinsichtlich dem bei der Produktion auftretenden mechanischen Verschleiß. Dieser Verschleiß führt zu Qualitätseinbußen beim Schweißen der Blechtafeln.

Aus der US-A 5328083 ist ein gattungsgemäßes Verfahren und eine entsprechende Vorrichtung zum Durchführen dieses Verfahrens bekannt, wobei allerdings keine Einrichtungen zur genauen Positionierung der Strahlwerkzeuge im Vergleich zum aktuell vorhandenen Verlauf des Blechstoßes (Nahtverlauf) beschrieben sind. Eventuelle Maßungenauigkeiten der Bleche und Positionsverschiebungen des Nahtverlaufes können hierbei zu fehlerhaften Schweißnähten führen.

In der US-A 5001324 ist darüber hinaus eine Laserschweißanlage beschrieben, wobei der Laserstrahl für den Schweißvorgang im wesentlichen quer zum Nahtverlauf mit Hilfe einer Positioniereinrichtung kontrolliert bewegbar ist.

Aus der DE 38 30 892 ist ein Verfahren zum Bestimmen der Position einer Nahtfuge relativ zu einer vorgebbaren Sollage vorbekannt, um die Relativlage des Laserarbeitsstrahls zu der Nahtfuge korrigieren zu können. Dabei wird ein kollimierter Lasermeßstrahl um den Nahtfugenverlauf alternierend umgelenkt und fokussiert und nach dem Reflektieren an der die Nahtfuge bildende Werkstücksanordnung von einem optoelektronischen Sensor empfangen und an eine Nachführeinrichtung weitergeleitet. Durch dieses Verfahren soll die Position einer Nahtfuge relativ zu einer vorgebbaren Sollage bestimmt werden, um die Relativlage des Laserarbeitsstrahls zu einer Nahtfuge korrigieren zu können. Hierzu soll die Ablenkfrequenz des umgelenkten Lasermeßstrahls mindestens 100 Hz betragen, wobei der Lasermeßstrahl in seiner Intensität mit mindestens 200 kHz moduliert wird, derart, daß der Lasermeßstrahl in einem Abstand von höchstens 10 mm von der Achse des Laserarbeitsstrahls auf die Werkstücksanordnung auftrifft, wobei als optoelektronischer Sensor nur ein einziges lichtempfindliches Element verwendet wird. Hierdurch sollen sich Vorschub- bzw. Schweißgeschwindigkeiten von 100 mm/s erreichen lassen, wobei bei dieser Vorschubgeschwindigkeit der Fugenverlauf noch in einem vorgegebenen Raster erfaßt wird. Durch Modulation der Laserdiodenstrahlung und weiterer anschließender Demodulation des durch die Werkstücke zusätzlich amplitudenmodulierten Sensorsignals werden Störeinflüsse seitens des Laserschweißplasmas und der Planck'schen Strahlung des Schmelzbades eliminiert.

In der DE 38 30 892 wird auch ein Stand der Technik beschrieben, bei dem in Fällen einer geradlinigen Schweißnaht vorzugsweise der Anfangs- und der Endpunkt der Nahtfuge mit Hilfe eines genau in Richtung der Achse des Laserhaupt- oder Schweißstrahls eingeblendeten Meßstrahls ermittelt wird. Die ermittelten Punkte werden in das Steuerprogramm für den Laserhauptstrahl eingegeben, und die Naht wird nach einem vorgegebenen Programm - in dem angenommenen Fall geradlinig - zwischen den ermittelten Punkten geschweißt.

Des weiteren wird in der DE 38 30 892 ein Nahtsuchsystem für das automatisierte Lichtbogenschweißen beschrieben, bei dem die vorbereitete Nahtfuge mit einer Meßfrequenz von maximal 10 Hz quer über die Nahtfuge alternierenden fokussierten Lasermeßstrahl abgetastet und die Lage des Laserschweißstrahls bzw. des Schweißbrenners relativ zur Nahtfuge im Falle einer Abweichung der Nahtfuge von der Sollage entsprechend korrigiert wird. Bei diesem bekannten Nahtsuchsystem wird als Sensor eine Fotodiodenzelle verwendet. Bedingt durch die große Zahl der Meßstellen und die zur Auswertung erforderliche Zeit verfügt dieses Nahtsuchsystem nur über eine Meßgenauigkeit von 0,2 bis 0,5 mm.

Beschrieben wird außerdem, daß der Durchmesser des Brennfleckes eines fokussierten Laserarbeits- oder Schweißstrahls teilweise nur 0,1 bis 0,2 mm betrage. Jedoch wiesen die zum Laserschweißen vorgesehenen Nahtfugen wegen dieser sehr geringen Ausdehnung des Brennfleckes ebenfalls nur sehr geringe Querschnittsabmessungen auf. Deshalb sei zum Schweißen derartiger Nahtfugen eine Meßgenauigkeit in der Größenordnung vom halben Durchmesser des Brennfleckes, als von etwa 0,05 mm erforderlich. Die mit den für das Lichtbogenschweißen verwendeten bekannten Nahtsuchsysteme erreichbare Meßgenauigkeit sei somit nicht mehr ausreichend. Die Vorschubgeschwindigkeit beim Laserschweißen könne bis in die Größenordnung von 100 mm/s bis 6 m/min erreichen und sei dann im allgemeinen bis zu zehnmal größer als die Geschwindigkeit beim Lichtbogenschweißen. Aus diesem Grunde erwiesen sich auch die Meßfrequenz der für das Lichtbogenschweißen bekannten Meßsysteme als unzureichend, da die aus dem oszillierenden Meßstrahl sich ergebenden Meßsignale nicht genügend schnell erfolgten, um den Laserhauptstrahl bei den gegebenen Vorschubgeschwindigkeiten genau nachführen zu können.

Aus der DE 37 23 611 ist eine Vorrichtung zum kontinuierlichen Stumpfschweißen von Bändern und Blechen vorbekannt, mittels mindestens eines ortsfesten Laserstrahls mit auf beiden Seiten der zu verschweißenden Bänder bzw. Bleche paarweise senkrecht zu deren Laufrichtung angeordneten Spannrollen, wobei diese Spannrollen aus Hohlachsen und darauf gelagerten und mit axialem Abstand voneinander angeordneten Rollenmäntel bestehen und jeder Schweißkopf der Laserstrahlschweißeinrichtung im Innern der Hohlachse mindestens einer Spannrolle angeordnet ist und als Durchgang für den Laserstrahl der Spalt zwischen den Rollenmänteln und eine Öffnung in der Hohlachse dienen. Bei dieser Vorrichtung sollen die zu verschweißenden Blechränder im von den Spannrollen eingespannten Bereich mit dem Schweißfleck des Laserstrahls beaufschlagt werden. Wegen dieser Einspannung der Bleche oder Bänder mittels stabiler und groß dimensionierter Rollen könne es nicht zu einem Aufwölben der Blechkanten oder Verziehen der Bleche im Schweißbereich kommen.

Die DE 38 01 626 betrifft einen nach dem Triangulationsprinzip arbeitenden rotierenden Zirkularscanner als optischer Nahtlagesensor für einen Schweißbrenner mit einem exzentrisch zu einer Rotationsachse angeordneten, einen immateriellen Zylinder- oder Kegelmantel beschreibenden, auf die Werkstückoberfläche gerichteten, insbesondere aus einer Laserlichtquelle gespeisten Primärstrahl, der auf dem Werkstück einen kreisenden Lichtfleck hervorruft, mit einer innerhalb des Zylinder- bzw. Kegelmantels angeordneten, auf den Lagebereich des Lichtfleckes gerichteten, mit der optischen Achse zum Primärstrahl geneigten Beobachtungsoptik, die den Lichtfleck auf einem Fotodiodenarray, einer Lateraleffektdiode oder dergleichen abbildet (Sekundärstrahl), wobei für jede Umfangsstellung des Zirkularscanners das jeweils zusammengehörende Wertepaar, bestehend aus Umfangsstellung und Sekundärstrahlposition auf dem Fotodiodenarray, der Lateraleffektdiode oder dergleichen ermittelt und als Sensorsignal zur Auswertung weitergeleitet wird. Das Fotodiodenarray, die Lateraleffektdiode oder dergleichen ist zweidimensional ausgebildet und ortsfest, das heißt nicht-rotierend angeordnet und dient zur simultanen Ermittlung beider Werte des genannten Wertepaares. In der Vorveröffentlichung wird auch eine konzentrische Anordnung eines Nahtlagesensors erwähnt.

Des weiteren werden Zirkularscanner beschrieben, die beim Einsatz als Nahtlagesensoren für Schweißbrenner exzentrisch zur Brennerachse in Schweißrichtung vorauslaufend angeordnet oder konzentrisch zum Schweißbrenner angeordnet sein können. Mit diesen vorbekannten Zirkularscannern könnten Aussagen über die Schweißfugenlage in Relation zum Schweißbrenner, die Schweißfugenrichtung und die Schweißfugenausbildung gewonnen werden. Eine Aussage über die Schweißfugenausbildung erlaube es beispielsweise, die Schweißparameter selbsttätig den geänderten Fugenbedingungen anzupassen oder ein Alarmsignal zum Herbeirufen von Wartungspersonal auszulösen.

Die DE 40 22 062 betrifft eine Vorrichtung zum geregelten Führen von Bändern und Stumpfschweißen entlang ihrer Längskanten, wobei mindestens eine achsbeweglich steuerbare Umlenkrolle für jedes Band vorgesehen ist, von denen die jeweils in Laufrichtung des Bandes vor der Schweißstelle letzten Umlenkrollen für jedes Band mit ihren parallelen Achsen soweit gegeneinander höhenversetzt sind, daß die über die Umlenkrollen geführten Bänder mit ihren Längskanten in der für die Verschweißung gewünschten Position zueinander stehen und in derselben Vertikalebene liegen und seitlich soweit gegeneinander versetzt sind, daß zwischen ihren gegenüberliegenden Endflächen ein Abstand der Länge verbleibt und von denen eine der letzten Umlenkrollen in der Höhenlage und eine in Axialrichtung verschiebbar gelagert ist, wobei eine Schweißeinrichtung, deren Schweißstrahl auf die Schweißstelle zwischen den letzten Umlenkrollen gerichtet ist, vorgesehen ist. Es sind außerdem Steuermittel vorgesehen, die für eine Axiallagenänderung der Umlenkrollen dienen. Ferner sind Abtastmittel vorhanden. Durch die in horizontaler Richtung versetzte Anordnung der letzten Umlenkrollen, von denen eine gegenüber der anderen in Axialrichtung verschiebbar ist, soll durch eine Feinregulierung der Lage der Bänder zueinander ein engtolerierter Spalt zwischen den Längskanten der Bänder während des Betriebes laufend eingehalten werden. Die Axialstellung der axial auf Abstand liegenden letzten Umlenkrollen werden durch die erwähnten Abtastmittel an den Längskanten der Bänder ständig lagegeregelt, um die gewünschte Spaltbreite stets einzuhalten. Der Abstand der Bandlängskanten wird durch einen Sensor maßlich erfaßt und die Meßergebnisse werden von einem Rechner ausgewertet. Von diesem erfolgen die Vorgaben an Stelleinheiten der Regelrollen. Vor dem Zusammenführen der Bänder im Scheitelpunkt der beiden letzten Umlenkrollen erfolgt eine Feinregulierung. Diese werden erreicht durch Sensoren, welche die Lage der Bandlängskanten zueinander erfassen. Die durch die Sensoren gewonnen Meßwerte werden ebenfalls vom Rechner ausgewertet. Von diesen erfolgen dann die Vorgaben für die Feinregulierung an die Stelleinheit der letzten Umlenkrolle, die in Axialrichtung nachgestellt wird, wenn eine Abweichung von der Sollage der Bandlängskanten festgestellt wird. So soll erreicht werden, daß vor Schweißbeginn immer ein konstanter vorbestimmbarer Spalt zwischen den zu verschweißenden Bandlängskanten vorhanden ist.

Die EP-A-0 450 349 betrifft ein Verfahren zum kontinuierlichen Verschweißen von auf Stoß geführten Bändern oder Blechen ohne Zusatzwerkstoffe mittels eines Laserstrahls, wobei die Bänder im Bereich der Schweißnaht in Bandlaufrichtung unmittelbar hinter dem Schweißfokus gekühlt werden, wobei die Kühlintensität in Abhängigkeit von der Breite des von den Stoßkanten der Bänder in Bandlaufrichtung unmittelbar vor dem Schweißfokus gebildeten Spaltes derart geregelt wird, daß dessen Breite innerhalb vorgegebener Toleranzwerte bleiben soll. Es wird auch eine Kühlung auf beiden Seiten der Bänder vorgeschlagen. In dieser Vorveröffentlichung wird auch eine Vorrichtung zum kontinuierlichen Verschweißen von auf Stoß geführten Bändern oder Blechen an deren Stoßkanten mittels eines ortsfesten Laserstrahls vorgeschlagen, mit an beiden Seiten der zu verschweißenden Bänder paarweise senkrecht zu deren Laufrichtung angeordneten Spannrollen, die im Bereich des Stoßes der Bänder einen Spalt bilden, durch den der ortsfeste Laserstrahl auf die zu verschweißenden Stoßkanten trifft, und mit einer in Bandlaufrichtung unmittelbar vor dem Schweißfokus angeordneten Meßeinrichtung für die den Istwert bildenden Breite des von den Stoßkanten der Bänder gebildeten Spaltes. Es ist außerdem eine Regelvorrichtung vorgesehen, die die genannte Meßeinrichtung und eine in Bandlaufrichtung hinter dem Schweißfokus angeordneten und auf die Bänder im Bereich der Schweißnaht einwirkenden Kühleinrichtung umfaßt, deren Kühlintensität in Abhängigkeit von dem von der Meßeinrichtung gelieferten Istwert für die Spaltbreite im Sinne einer innerhalb vorgegebener Toleranzwerte liegenden konstanten Spaltbreite eingestellt wird.

Der Erfindung liegt die Aufgabe zugrunde, ein Verfahren zum kontinuierlichen Stumpfnahtschweißen für Blechtafeln an deren Längskanten zu schaffen, bei welchem unabhängig von mechanischen Blechtafeln die relative Lage der Blechtafeln und damit die Nahtfuge innerhalb eines vorgegebenen Toleranzbereiches mit hoher Genauigkeit eingehalten wird.

Des weiteren liegt der Erfindung die Aufgabe zugrunde, eine Vorrichtung zum Durchführen des erfindungsgemäßen Verfahrens zu schaffen, die sich mit besonderem Vorteil, aber nicht ausschließlich, zum Schweißen von Karosserieblechen, insbesondere für die Kfz-Industrie, eignet.

Die Aufgabe hinsichtlich des Verfahrens wird durch die in Patentanspruch 1 wiedergegebenen Merkmale gelöst.

Bei dem erfindungsgemäßen Verfahren wird auf eine mechanisch präzise Ausrichtung der miteinander zu verschweißenden Bleche relativ zum Strahlwerkzeug, zum Beispiel einer Laserschweißvorrichtung, bewußt verzichtet. Statt dessen wird das Strahlwerkzeug mittels Nahtfolgesensorik dem Blechstoß der beiden Blechtafeln nachgeführt.

Die beiden miteinander zu verschweißenden Bleche werden manuell oder automatisch von einem Blechstapel entnommen und über den Auflegebereich der Schweißmaschine gebracht. Dort werden die Bleche auf die Schweißmaschine aufgeworfen.

Die in Durchlaufrichtung gesehene zum Beispiel linke Blechtafel wird als "Masterplatine", das in Durchlaufrichtung gesehene rechte Blech als "Slaveplatine" bezeichnet. Die Masterplatine wird in Durchlaufrichtung gefördert, derart, daß sie gegen ein starres, sich in Durchlaufrichtung erstreckendes, im Nahtfugenbereich angeordnetes Lineal getrieben wird. Dieses Lineal dient somit zum Ausrichten der Masterplatine, um später mit der zu verschweißenden Blechkante im Sichtfeld eines Nahtfolgesensors zu liegen.

Die Slaveplatine wird in Richtung des Fügebereichs gefördert. Der seitliche Abstand zur Masterplatine kann hierbei noch relativ groß sein, zum Beispiel 10 bis 60 mm, betragen.

Die Geschwindigkeiten der Fördereinrichtungen für die Master- und für die Slaveseite sind dabei elektronisch synchronisiert, also abgeglichen.

Beim Einlauf der beiden miteinander zu verschweißenden Bleche (Masterplatine und Slaveplatine) in den Fügebereich der Schweißmaschine wird die Masterplatine festgehalten. Dadurch wird der Geradeauslauf der Masterplatine auch unter Einwirkung von seitlichen Gegenkräften bewirkt. Gleichzeitig werden auf die Slaveplatine Kräfte ausgeübt, die sie beim Weitertransportieren gegen Verrutschen sichern. Damit werden zwei sich überlagernde Bewegungen eingeleitet, nämlich

a) relativ zur Förderbewegung reduziert die Slaveplatine durch ihre Festhaltekraft bedingt ihre Geschwindigkeit, und zwar so lange, bis durch einen festen Anschlag die Slaveplatine mitgenommen wird. Da die Antriebsbewegung der Slaveseite zu der Antriebsbewegung der Masterseite synchronisiert ist, sind nun Master- und Slaveplatine in Schweißrichtung zueinander positioniert und bewegen sich in Richtung Schweißmaschine weiter.

b) Durch die Einwirkung seitlicher Kräfte wird die Slaveplatine gegen die Masterplatine getrieben und damit gefügt.

Die Fügekraft der Slaveplatine ist regulierbar bzw. einstellbar und muß stets niedriger sein als die Haltekräfte, die auf die Masterplatine einwirken.

Die nun gefügten Blechtafeln werden einem Strahlwerkzeug, zum Beispiel einer Laserschweißvorrichtung oder einer Elektronenstrahlschweißvorrichtung, zugeführt.

Normalerweise kann davon ausgegangen werden, daß der zu verschweißende Stoß, also der Nahtbereich von Masterplatine und Slaveplatine, relativ zum Strahlwerkzeug nicht exakt positioniert ist. Deshalb wird durch eine Nathfolgesensorik der Schweißfugenbereich ermittelt und das Strahlwerkzeug der Nahtfuge nachgefahren. Dies geschieht dadurch, daß die Nahtfolgesensorik die von ihr gemessenen Werte einer Positioniersteuerung übermittelt. Die Positioniersteuerung gibt an den Antrieb oder die Antriebe der Strahlschweißvorrichtung entsprechende Stellwerte. Dadurch wird das Strahlwerkzeug dem aktuell vorhandenen Verlauf des Blechstoßes nachgeregelt.

Bei der Erfindung wird also von der Erkenntnis ausgegangen, daß ein absoluter Geradeauslauf von Blechtafeln in einer Maschine praktisch niemals erzielt werden kann.

Erfindungsgemäß werden zudem in Durchlaufrichtung der miteinander zu verschweißenden Bleche zwei Nahtfolgesensoren vorgesehen. Hierdurch ergibt sich der Vorteil, daß die Sensoren in relativ großem Abstand vom Schweißfokus vorgesehen werden können, so daß sie nicht durch Spritzer, Kühlmittel oder dergleichen verunreinigt werden. Die vom ersten und zweiten Sensor ermittelten Meßwerte werden an einen Rechner weitergegeben, der aufgrund der eingegebenen Meßwerte errechnet, an welcher Stelle sich ein bestimmter Nahtfugenbereich befindet, wenn er orthogonal zum Schweißfokus vorbeilaufen würde. Das Strahlwerkzeug kann in diesem Falle so gesteuert werden, daß das Strahlwerkzeug sich zu dem erreichneten Zeitpunkt genau an der Stelle befindet, an der der errechnete Nahtfugenbereich diese Position erreicht hat. Auf diese Weise wird somit fortlaufend dis Strahlwerkzeug so gesteuert, daß es sich zu einem aus der Geschwindigkeit, mit der sich die Bleche in Richtung auf das Strahlwerkzeug, also in Förderrichtung bewegen, in Abhängigkeit von dem durch die Sensoren gemessenen Meßergebnis genau über dem zu schweißenden Nahtfugenbereich befindet.

In Patentanspruch 2 ist eine weitere vorteilhafte Verfahrensweise der Erfindung beschrieben. Mit der Nahtfolgesensorik - einem oder zwei Sensoren - läßt sich die Spaltbreite zwischen den Blechtafeln fortlaufend ermitteln. Anhand eines aufgebauten Regelkreises kann damit die Leistung des Schweißstrahls, zum Beispiel einer Laserschweißvorrichtung, die erforderliche Kühlleistung für den Schweißprozeß (Wasser, Gas), die notwendige Fokuslage des Schweißstrahls und die Schweißgeschwindigkeit permanent angepaßt werden. Dies gewährleistet optimlae Schweißkapazität und optimale Wirtschaftlichkeit des Schweißverfahrens.

Die Aufgabe hinsichtlich der Vorrichtung wird durch in Patentanspruch 3 wiedergebenene Merkmale gelöst.

Die erfindungsgemäße Vorrichtung ermöglicht bei optimaler Wirtschaftlichkeit der Schweißmaschine einen kontinuierlichen Schweißbetrieb, so daß sich hohe Schweißleistungen erzielen lassen, was insbesondere beim Schweißen von Karosseriblechen, zum Beispiel für die Kfz-Industrie, von besonderem Vorteil ist.

Besonders vorteilhafte Vorrichtungen sind in den Patentansprüchen 4 und 9 beschrieben.

In der Zeichnung ist die Erfindung - teils schematisch - beispielsweise veranschaulicht. Es zeigen:

Figur 1     eine erfindungsgemäße Vorrichtung beim Auflegen der Blechtafeln in der Draufsicht, teils abgebrochen dargestellt;

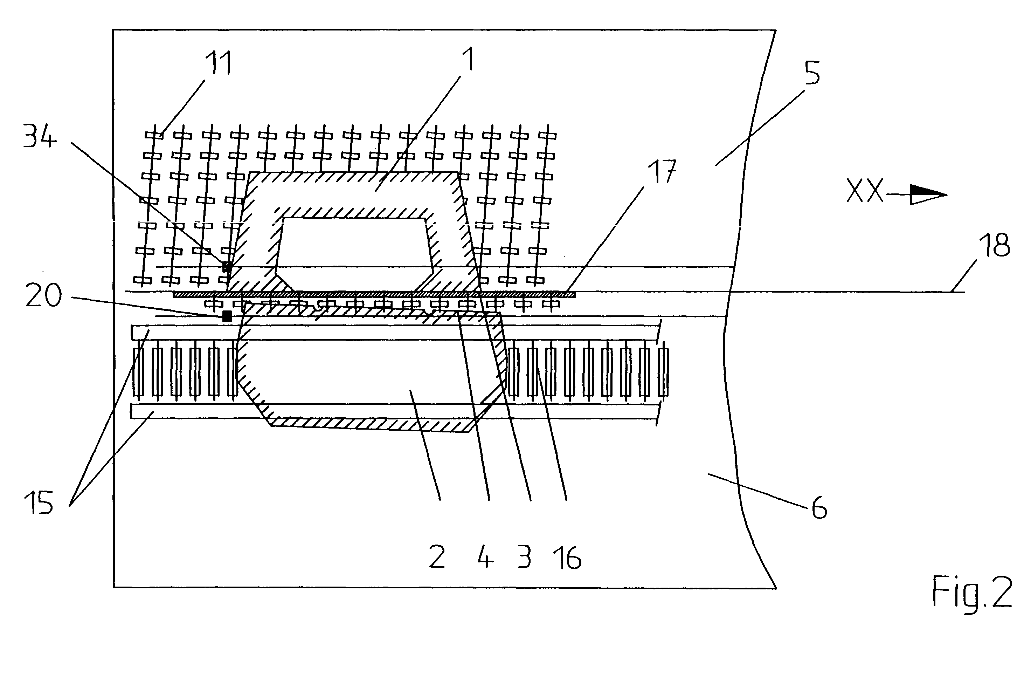

Figur 2     die aus Figur 1 ersichtliche Vorrichtung, nachdem die Masterplatine ausgerichtet ist;

Figur 3     einen weiteren Ausschnitt aus einer erfindungsgemäßen Vorrichtung, ebenfalls in der Draufsicht, nach dem Fügen der Master- und der Slaveplatine;

Figur 4     eine Schweißmaschine mit Nahtfolgesensorik und Wasserkühlung in der Seitenansicht, teils abgebrochen dargestellt;

Figur 5     einen weiteren Ausschnitt aus einer erfindungsgemäßen Vorrichtung, ebenfalls in der Draufsicht, im Schweißbereich;

Figur 6     eine Vorrichtung gemäß der Erfindung in der Seitenansicht, teils abgebrochen dargestellt;

Figur 7     eine Teildraufsicht in Richtung des Pfeiles "R" der Figur 6;

Figur 8     einen Schnitt nach der Linie A-A der Figur 6;

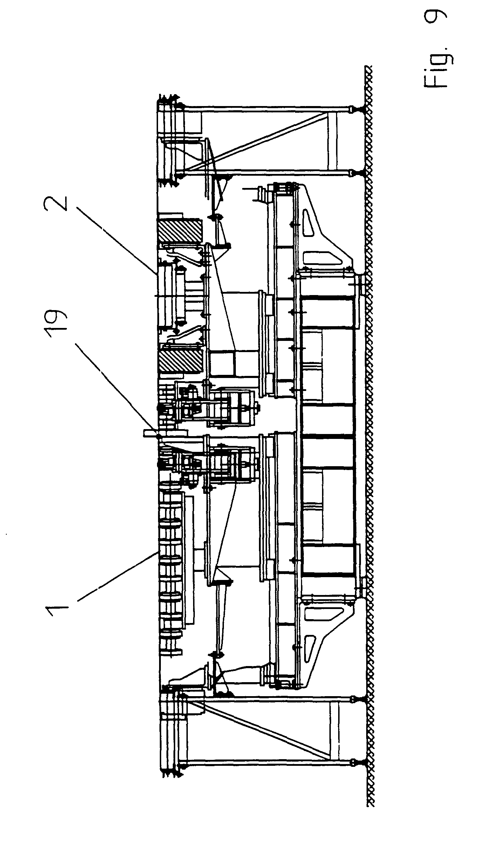

Figur 9     einen Schnitt nach der Linie B-B der Figur 6;

Figur 10     eine Draufsicht auf zwei Blechtafeln;

Figur 11     eine ausschnittsweise Vergrößerung der Figur 10 zur Veranschaulichung der mathematischen Abhängigkeit.

Bei den aus der Zeichnung ersichtlichen Ausführungsformen wird ohne Zusatzwerkstoff geschweißt. Statt dessen kann aber auch im Bedarfsfalle mit Zusatzwerkstoff geschweißt werden. Außerdem ist es möglich, beschichtete, zum Beispiel feuerverzinkte Bleche ohne Zusatzwerkstoff oder mit Zusatzwerkstoff zu verschweißen, was aber im einzelnen nicht dargestellt ist.

In der Zeichnung ist mit dem Bezugszeichen 1 eine Masterplatine und mit 2 eine Slaveplatine bezeichnet, die an ihren einander zugekehrten Längsseiten 3 bzw. 4 durch eine Schweißnaht ohne Schweißzusatzwerkstoff einstückig miteinander verbunden werden sollen.

Bei den Blechtafeln 1 und 2 kann es sich zum Beispiel um Karosseriebleche für die Kfz-Industrie handeln.

Mit den Bezugszeichen 5 bzw. 6 sind Förderbahnen bezeichnet, die unterschiedliche Ausgestaltungen aufweisen können und deren Einzelglieder noch beschrieben werden. Die Transportrichtung ist mit dem Bezugszeichen XX bezeichnet.

Die Förderbahnen 5 bzw. 6 umfassen jeweils mindestens einen Förderer im Auflegebereich 7 für die miteinander zu verschweißenden Blechtafeln 1 und 2, in einem Fügebereich 8, in einem Schweißbereich 9 und einen Kipptisch 10 zum Abtransportieren der miteinander verschweißten Blechtafeln 1 und 2.

In Durchlaufrichtung XX der Blechtafeln 1 und 2 hintereinander sind auf der Seite der Masterplatine Magnetrollen 11, Magnetbänder 12 mit Transportwalzen 13 und Druckrollen 14 angeordnet. Außerdem ist mit 34 eine Mitnehmerschleppkette bezeichnet. Die Magnetrollen 11, die Magnetbänder 12 sowie die Mitnehmerschleppkette 34 sind motorisch angetrieben. Die motorischen Antriebe sind aus Gründen der Vereinfachung nicht dargestellt.

Auf der Slaveplatinenseite sind in Förderrichtung XX hintereinander angeordnet Magnetbänder 15 mit dazwischen liegenden Transportwalzen 16. Die Magnetbänder 15 sind motorisch angetrieben.

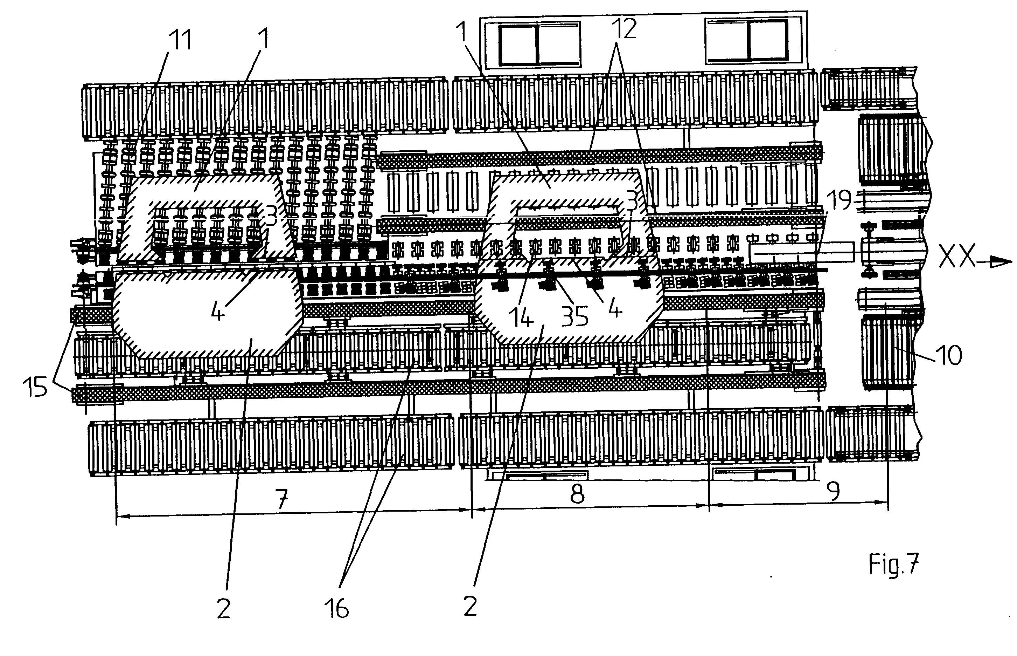

Das Bezugzeichen 17 bezeichnet ein Lineal für die Masterplatine 1, während 18 eine Mittellinie ist, die mit der theoretischen Schweißlinie zusammenfällt und die durch einen Schweißfokus 19 verläuft (Figur 7).

Das Bezugzeichen 20 bezeichnet wiederum eine motorisch angetriebene Mitnehmerschleppkette, die wie die Mitnehmerschleppkette 34 ausgebildet und angetrieben sein kann. Die Antriebe für die Mitnehmerschleppketten 20 und 34 können in ihrer Fördergeschwindigkeit regelbar sein.

Die Förderbahnen 5 und 6 links und rechts der Vorrichtung umfassen Förderer 21 bzw. 22, die sich bis in den Bereich des Kipptisches 10 erstrecken.

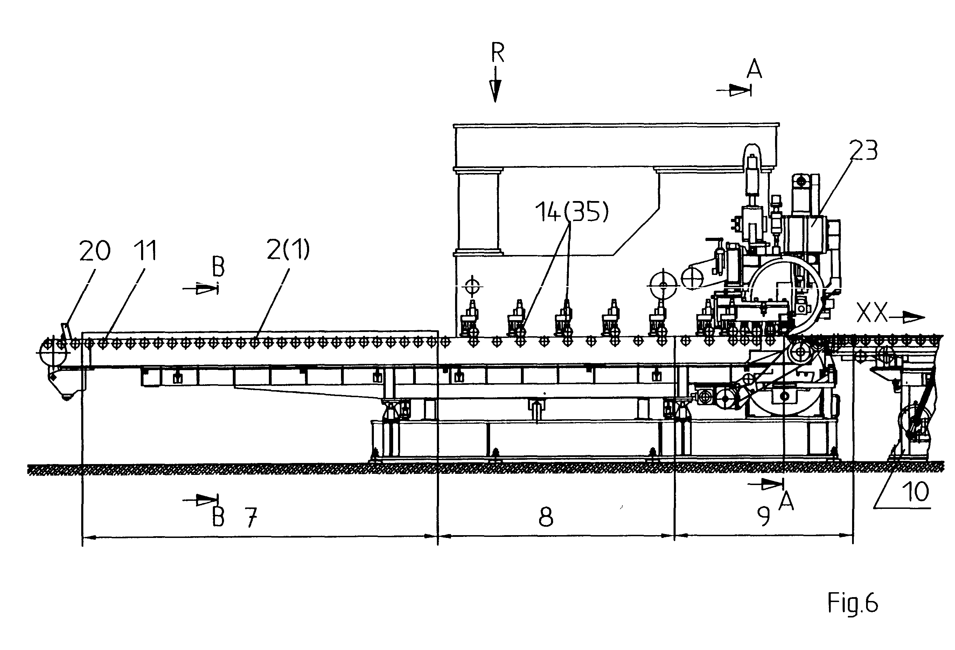

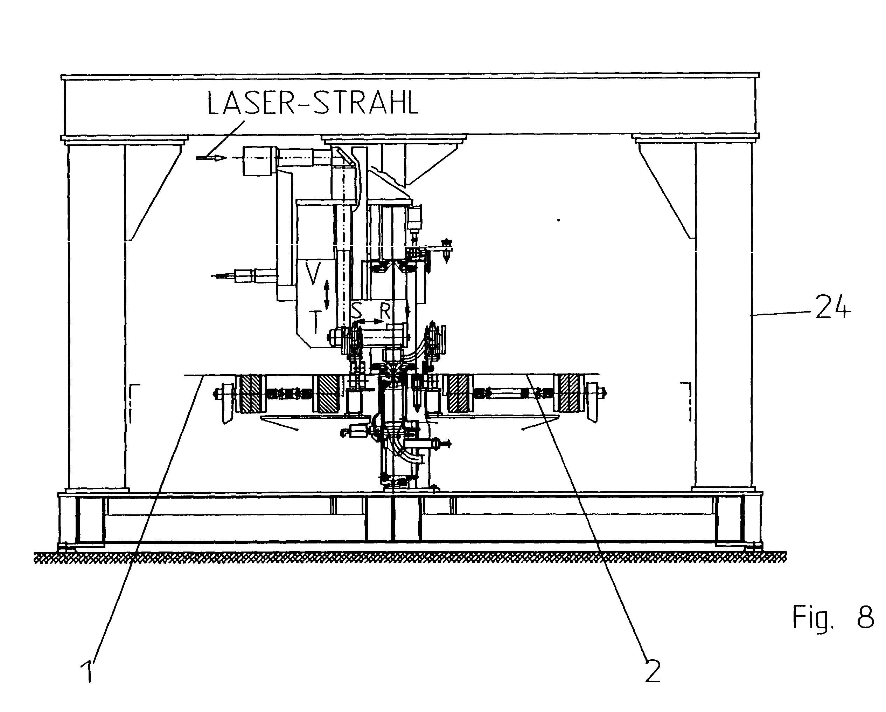

Bei 23 ist eine Schweißvorrichtung angeordnet (Figur 6), die bei der dargestellten Ausführungsform als Laserschweißvorrichtung ausgebildet ist. Die Schweißvorrichtung ist an einem die Förderbahnen für die Blechtafeln 1 und 2 übergreifenden Portal 24 angeordnet und in Richtung V - T senkrecht (Figur 8), also in Richtung der Z-Achse und in Richtung C - D (Figur 8) horizontal, also in Richtung der Y-Achse und quer zur Durchlaufrichtung XX steuerbar und in der jeweils gewünschten Position arretierbar angeordnet. Zum Schweißen von unterschiedlich dicken Blechen kann der Schweißkopf bzw. das Strahlwerkzeug um eine Rotationsachse geschwenkt werden.

Die Schweißvorrichtung 23 weist ein geeignetes Strahlwerkzeug, und zwar bei der dargestellten Ausführungsform eine Laserschweißvorrichtung, auf, deren elektronische und elektrische Elemente im einzelnen nicht bezeichnet sind. Auch die Steuerungsmittel für das Strahlwerkzeug sind nicht besonders bezeichnet.

Der Schweißvorrichtung 23 ist eine Kühlvorrichtung 25, zum Beispiel eine Wasserkühlung, zugeordnet, die hinter dem Schweißfokus 19 angeordnet und auf diesen hingerichtet ist. Es kann aber auch eine Gaskühlung, z. B. eine Luftkühlung, verwendet werden.

Ein Laserstrahl ist mit dem Bezugzeichen 26 bezeichnet.

In Durchlaufrichtung XX ist vor dem Schweißfokus 19 eine geeignete Sensorik 27 angeordnet, die in der noch zu beschreibenden Art und Weise den Schweißnahtbereich detektiert und die gemessenen Werte an einen Rechner 28 weitergibt.

Die Sensorik 27 kann einen oder in Durchlaufrichtung XX auch zwei mit Abstand hintereinander angeordnete Sensoren aufweisen, die den Nahtspalt jeweils detektieren und ihre Werte an den Rechner 28 durch nicht dargestellte elektrische Leitungen weiterleiten.

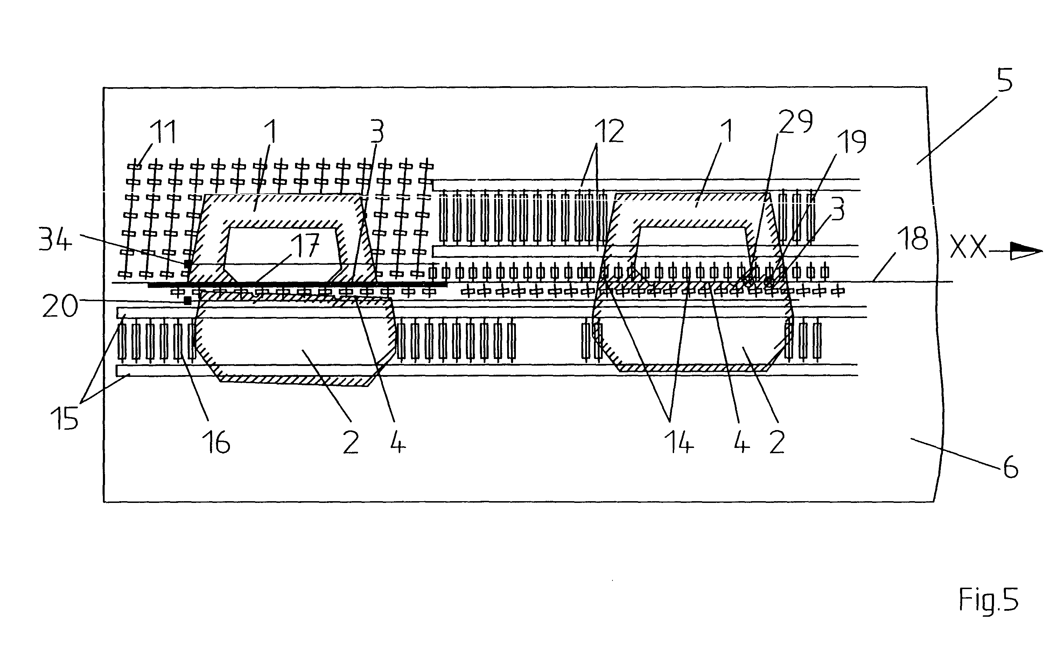

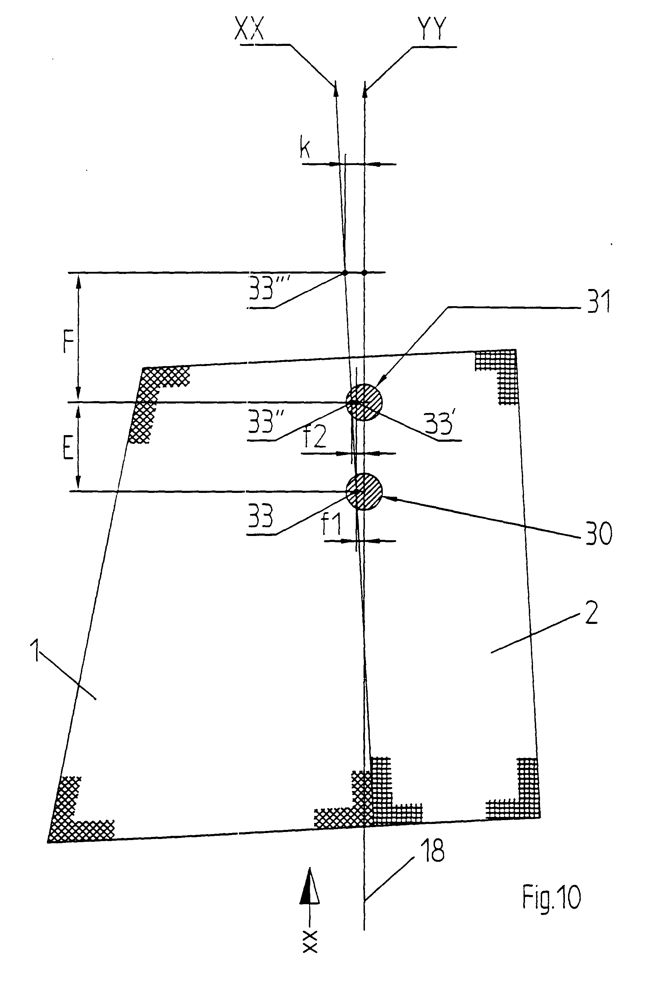

Bei der Ausführungsform nach Figur 5 weist die Sensorik 27 nur einen Sensor 29 mit einem Sensorfenster auf, während bei der Ausführungsform nach Figur 10 zwei Sensoren 30 und 31 der Sensorik 27 zugeordnet sind. In diesem Fall ist der in Richtung der Durchlaufrichtung XX gemessene Abstand der beiden Sensoren 30 und 31 von dem Schweißfokus 19 relativ groß. Hierdurch werden die Sensoren 30 und 31 geschützt.

Statt zwei Blechtafeln 1 und 2 können zum Beispiel auch vier Blechtafeln zusammengeschweißt werden. Beispielsweise ist es möglich, zunächst eine Masterplatine 1 und eine Slaveplatine 2 einstückig durch eine Schweißnaht zu verbindien und dann zwei oder mehr solchermaßen hergestellte neue Blechtafeln abermals einstückig zusammenzuschweißen, so daß ein einstückiges Blech entsteht, das aus ursprünglich vier getrennten Blechtafeln zusammengeschweißt worden ist.

Auch ist es nicht erforderlich, die Bleche an ihren Längsseiten einstückig durch eine Schweißnaht zu verbinden. Vielmehr ist es auch möglich, die Bleche mit einer erfindungsgemäßen Vorrichtung und Verfahrensweise an beliebigen anderen Stellen durch Stumpfnahtschweißen zusammenzuschweißen (zum Beispiel ununterbrochene Nähte).

Wenngleich oben und nachfolgend die erfindungsgemäße Verfahrensweise in Anwendung auf das Schweißen von Karosserieblechen, die vornehmlich für die Kfz-Industrie Anwendung finden, dargestellt und beschrieben ist, so fallen unter den Erfindungsgedanken auch solche Ausführungsformen, bei denen statt einer Laserstrahlschweißvorrichtung andere Strahlschweißwerkzeuge und andere Anwendungsgebiete zur Anwendung gelangen.

Die Wirkungsweise der aus der Zeichnung ersichtlichen Vorrichtung ist folgende:

Bei dem erfindungsgemäßen Verfahren wird auf mechanisch genaue Ausrichtung der miteinander durch Schweißen zu verbindenden Blechtafeln 1 und 2 relativ zum Strahlwerkzeug verzichtet. Statt dessen wird das Strahlwerkzeug mittels Nahtfolgesensorik dem Blechstoß, also dem Nahtverlauf, nachgeführt. Hierbei ergibt sich folgende Verfahrensweise:

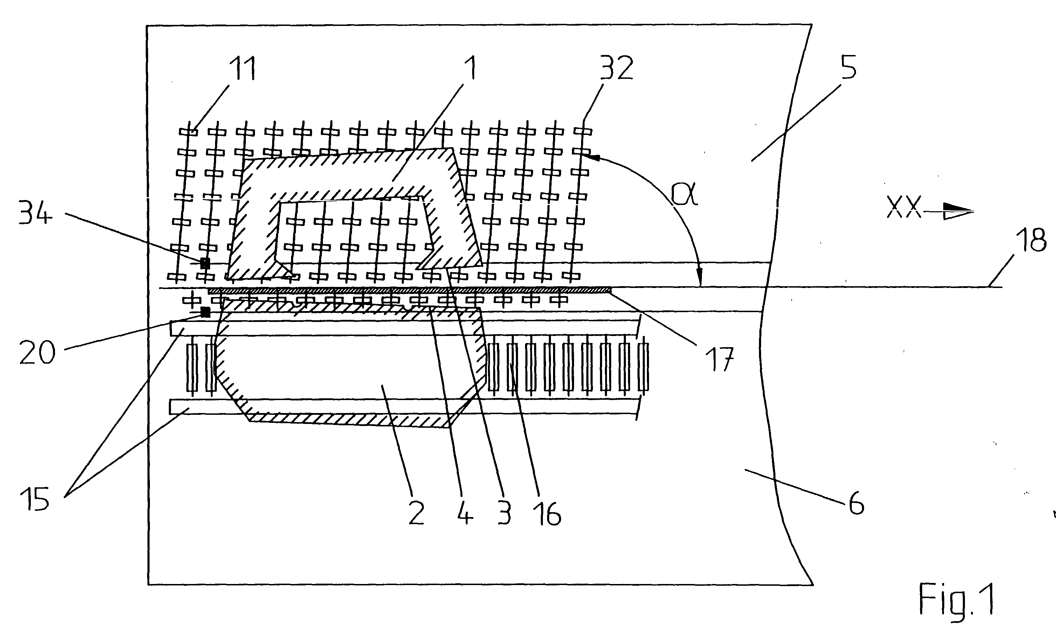

Eine Masterplatine 1 und eine Slaveplatine 2 werden manuell oder mit automatischen Einlegegeräten von je einem nicht dargestellten Blechstapel entnommen und über die Förderbahn 5 bzw. 6 gebracht und dort auf die Magnetrollen 11 einerseits bzw. die Magnetbänder 15 andererseits abgeworfen (Figur 1).

Daraufhin wird die Masterplatine 1 durch die Mitnehmer der Mitnehmerschleppkette 34 in Durchlaufrichtung XX gefördert. Die Masterplatine 1 bewegt sich dabei auf den Magnetrollen 11, deren Drehachsen, zum Beispiel 32, in einer quer zur Durchlaufrichtung XX verlaufenden Rollenreihe unter einem spitzen Winkel ($\alpha$) verlaufen. Die Magnetrollen 11 bewirken somit, daß die Masterplatine 1 gegen das Lineal 17 getrieben wird. Das Lineal 17 dient somit zum Ausrichten der Masterplatine 1, um später mit der zu schweißenden Längsseite 3 im Sichtfenster des betreffenden Sensors der Nahtfolgesensorik 27 zu liegen.

Die auf die Magnetbänder 15 abgeworfene Slaveplatine 2 wird ebenfalls in Richtung XX, also zum Fügebereich 8 (Figuren 6 und 7) gefördert. Hierbei beträgt der seitliche Abstand zur Masterplatine 1 etwa zehn bis sechzig Millimeter.

Die Fördergeschwindigkeiten der Förderbahnen 5 und 6 für die Masterplatine 1 einerseits und die Slaveplatine 2 andererseits sind elektronisch aufeinander abgestimmt.

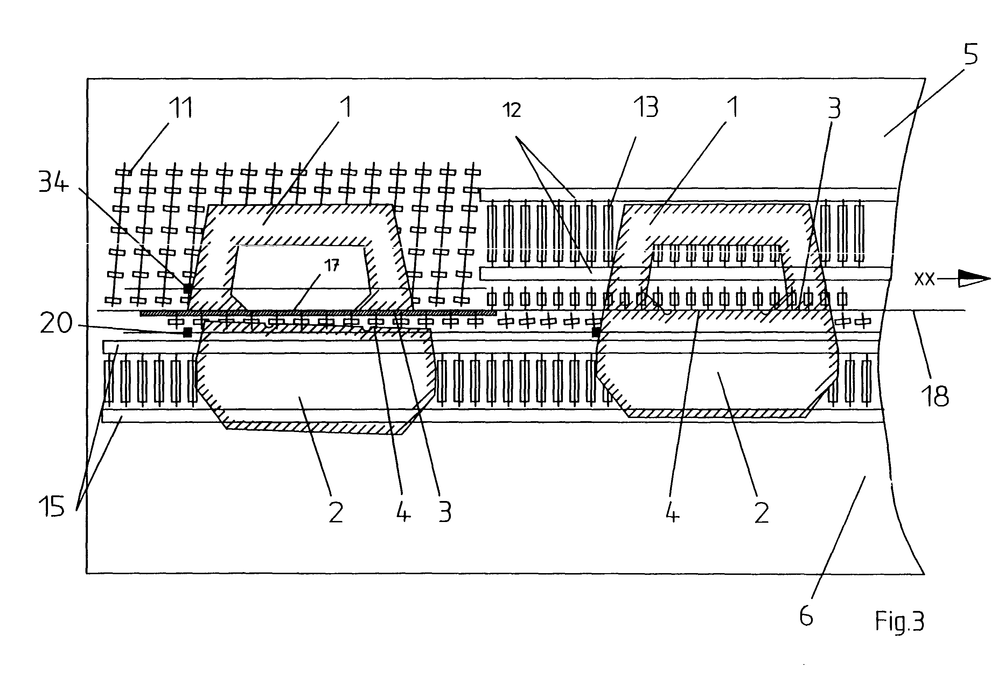

Bei Einlauf der Masterplatine 1 und der Slaveplatine 2 in den Fügebereich 8 (Figur 6 und 7) wird die Masterplatine 1 durch die von oben angreifenden Druckrollen 14 auf die Magnetbänder 12 gedrückt. Dadurch wird der Geradeauslauf der Masterplatine 1 auch unter Einwirkung von seitlichen Querkräften bewirkt. Gleichzeitig werden auf die Slaveplatine 2 von oben angreifende Druckrollen 35 aufgesetzt, deren Drehachsen ebenfalls einen spitzen Winkel zur Durchlaufrichtung XX einnehmen. Damit werden zwei sich überlagernde Bewegungen eingeleitet, nämlich

a) relativ zur Mitnehmerschleppkette 20 verringert die Slaveplatine 2 durch die Gegenkraft der Druckrollen 35 ihre Geschwindigkeit in Richtung XX. Dadurch holen die Mitnehmer der Mitnehmerschleppkette 20 relativ zur Slaveplatine 2 auf, bis ein Mitnehmer an der in Durchlaufrichtung XX gesehenen hinteren Kante anliegt und dadurch die Slaveplatine 2 mitnehmen. Von diesem Moment an erfolgt die weitere Förderung der Slaveplatine 2 über die Mitnehmerschleppkette 20. Da die Mitnehmerschleppkette 20 der Slaveseite zu den Magnetbändern 12 der Masterplatine 1 synchronisiert ist, sind nun die Master- und die Slaveplatine 1 und 2 in Durchlaufrichtung XX zueinander positioniert und laufen mit gleicher Geschwindigkeit dem Strahlwerkzeug zu.
b) Durch die Einwirkung der schräg angeordneten Druckrollen 35 wird die Slaveplatine 2 gegen die Masterplatine 1 getrieben und damit gefügt (Figur 3).

Die Fügekraft der Slaveplatine 2 ist einstellbar und muß stets niedriger sein als die Haltekräfte, die auf die Masterplatine 1 einwirken.

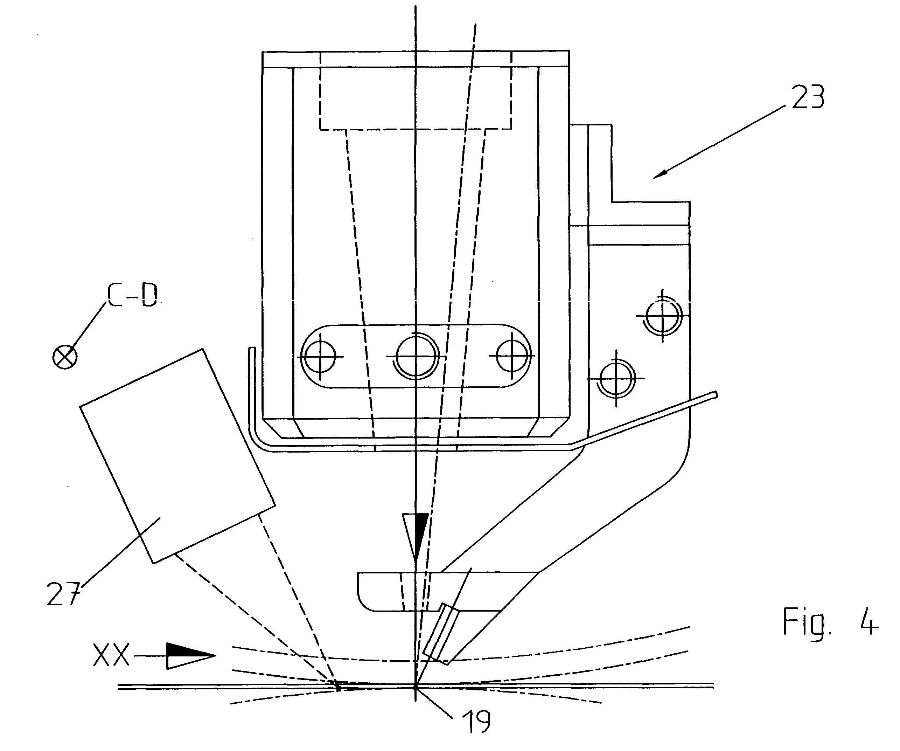

Die gemäß obiger Verfahrensweise gefügten, also auf Stoß gegeneinander gebrachten Blechtafeln 1 und 2 werden nunmehr der Schweißvorrichtung 23 zugeführt. Der zu schweißende Stoß der Blechtafeln 1 und 2 liegt relativ zum Strahlwerkzeug nicht immer exakt auf den Fördervorrichtungen positioniert. Deshalb ist es notwendig, mittels der Nahtfolgesensorik 27 den Verlauf des Stoßes und damit der Schweißnaht zu bestimmen und das Strahlwerkzeug diesem Blechstoß nachzufahren (Figuren 4 und 5). Die Nahtfolgesensorik 27 übermittelt dabei die gemessenen Werte einer Positioniersteuerung (nicht dargestellt). Diese Positioniersteuerung gibt an die motorische Achse Y für eine Verstellung in Richtung C bzw. D entsprechende Stellwerte. Dadurch wird das Strahlwerkzeug dem tatsächlich vorhandenen Lauf des Blechstoßes nachgesteuert (Figur 8). Hierbei wird von der Überlegung ausgegangen, daß in einer Maschine ein absoluter Geradeauslauf von Blechtafeln 1 und damit auch ein absoluter Geradeauslauf des Blechstoßes nicht zu erzielen ist.

Mit der Nathfolgesensorik 27 kann darüber hinaus die Spaltbreite zwischen den Längsseiten 3 und 4 der Masterplatine 1 und der Slaveplatine 2 bestimmt werden. Mit einem Regelkreis (nicht dargestellt) kann nunmehr die Leistung des Schweißstrahls, die erforderliche Kühlleistung der Kühlvorrichtung 25 für den Schweißprozeß und die notwendige Lage des Schweißfokus 19 fortlaufend angepaßt werden. Hierdurch läßt sich eine optimale Schweißkapazität und eine optimale Wirtschaftlichkeit der Schweißplatine erzielen.

Bei der beschriebenen Ausführungsform ist nur ein Sensor bzw. nur ein Sensorfenster der Sensorik 27 zugeordnet.

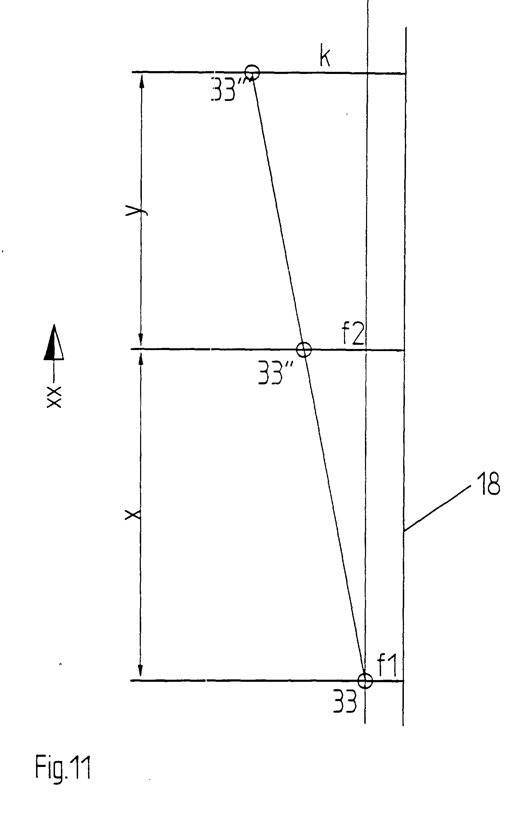

Bei der Ausführungsform nach den Figuren 10 bis 11 sind in Durchlaufrichtung X zwei Sensorfenster, also zwei Sensoren der Sensorik 27 zugeordnet.

Aus Figur 10 erkennt man die Lage der beiden miteinander zu verschweißenden Blechtafeln 1 und 2 zueinander.

In den Figuren 10 bis 11 bedeuten:

$f_1$ = Abweichung eines Blechkantenpunktes 33 vom theoretischen Schweißpunkt an der Meßstelle des ersten Sensors 30.

$f_2$ = Abweichung eines Blechkantenpunktes 33 vom theoretischen Schweißpunkt an der Meßstelle des zweiten Sensors 31.

33' = theoretischer Blechkantenpunkt 33 an der Meßstelle des Sensors 31. Dieser Punkt wird nur bei mathematisch exaktem Geradeauslauf der Blechtafeln 1 und 2 erreicht.

33" = tatsächlicher Blechkantenpunkt 33 an der Meßstelle des zweiten Sensors 31. Dieser Punkt wird unter tatsächlichen Betriebsbedingungen, also in der Praxis, aufgrund vorhandener mechanischer Toleranzen erreicht.

33''' = durch eine Rechenfunktion bestimmbarer Blechkantenpunkt 33 an der Schweißstelle;

ermittelt aus $f_1$ und $f_2$.

k =          Abweichung des Blechkantenpunktes 33 vom theoretischen Schweißpunkt. k ist der Vorgabewert für die Y-Achse der Strahlführung.

k =          $f(f_1/f_2/V_{schweiß})$

E, F          const

YY =          theoretische Bewegungsrichtung der Blechtafeln 1, 2.

Der Vorgabewert k für die Strahlführung muß zu dem Zeitpunkt eingestellt werden, in dem der Blechkantenpunkt 33 den Sensor 30 in der Schweißachse passiert. Damit ist k eine Funktion der Schweißgeschwindigkeit und der Zeit. Hieraus ergibt sich die geometrische Abhängigkeit:

$$\frac{k - f_1}{f_2 - f_1} = \frac{E+F}{E}$$

$$k = \frac{(f_2 - f_1)(E+F)}{E} + f_1$$

Hieraus folgt, daß aus den von den Sensoren 30 und 31 gemessenen Werten der Rechner den Blechkantenpunkt 33''' errechnet und dadurch das Strahlwerkzeug zu dieser Stelle steuert. Wie man erkennt, können die Sensoren 30 und 31 in einem relativ großen Abstand von dem tatsächlichen Schweißpunkt 33''' angeordnet werden, so daß sie gegen Schweißspritzer, aber auch gegen Hitze und den Einfluß von Kühlmitteln, relativ gut geschützt sind. Dies bedingt weniger Störungen.

## Bezugszeichenliste

| | |
|---|---|
| (1) | Masterplatine, Blechtafel |
| (2) | Slaveplatine, Blechtafel |
| (3), (4) | Längsseite |
| (5), (6) | Förderbahn |
| (7) | Auflegebereich |
| (8) | Fügebereich |
| (9) | Schweißbereich |
| (10) | Kipptisch |
| (11) | Magnetrollen |
| (12) | Magnetbänder |
| (13) | Transportwalzen |
| (14) | Druckrollen |
| (15) | Magnetbänder |
| (16) | Transportwalzen |
| (17) | Lineal |
| (18) | Mittellinie, theoretische Schweißlinie |
| (19) | Schweißfokus, Schweißpunkt |
| (20) | Mitnehmerschleppkette |
| (21), (22) | Förderer |
| (23) | Schweißvorrichtung |
| (24) | Portal |
| (25) | Kühlvorrichtung |
| (26) | Laserstrahl |
| (27) | Sensorik, Nahtfolgesensorik |
| (28) | Rechner |
| (29) | Sensorfenster, Sensor |
| (30), (31) | Sensor |
| (32) | Drehachse |
| (33) | Blechkantenpunkt |
| (34) | Mitnehmerschleppkette |
| (35) | Druckrollen |

| | |
|---|---|
| α | Winkel der Drehachse der Magnetrollen (11) |
| XX | Durchlaufrichtung, theoretische Förderrichtung |
| E, F | Abstand |

## Patentansprüche

1. Kontinuierliches Stumpfnahtschweißverfahren von Blechtafeln (1, 2), insbesondere im Karosseriebau der Kfz-Industrie mittels Strahlschweißens - Elektronenstrahlschweißen, Laserschweißen oder dergleichen - , bei welchem die miteinander zu verschweißenden Blechtafeln (1, 2) über den Auflegebereich (7) gebracht und abgelegt und anschließend weitertransportiert werden, eine der beiden Blechtafeln (1) als Masterplatine dient, die durch eine resultierende Vorschubbewegung gegen ein starres auf der Mitte der theoretischen Schweißlinie (18) befindliches Lineal (17) in Richtung dieser theoretischen Schweißlinie (18) ausgerichtet wird, während die als 'Slaveplatine' ausgebildete zweite Blechtafel (2) ebenfalls in Durchlaufrichtung (XX) weiterbefördert wird, wobei die Transportgeschwindigkeiten der Masterplatine (1) und die der Slaveplatine (2) elektronisch aufeinander abgeglichen sind, woraufhin die Masterplatine (1) am Ende oder unmittelbar nach dem Verlassen des Lineals (17) durch von oben angreifende Kräfte zwecks Sicherstellung ihres erreichten Geradeauslaufs arretiert wird, während die Slaveplatine (2) gegen die Längsseite der ausgerichteten und arretierten Masterplatine (1) getrieben und andererseits durch wenigstens eine von oben angreifende Kraft ihre Bewegung so weit verzögert wird, bis die miteinander zu verschweißenden Längsseiten von Masterplatine (1) und Slaveplatine (2) in der gewünschten Relativlage zueinander kommen und wobei die beiden Blechtafeln (1, 2) daraufhin synchron bewegt werden, **dadurch gekennzeichnet,** daß die sich synchron bewegenden Blechtafeln (1, 2) einer Nahtfolgesensorik (27) zugeführt werden, die den Nahtverlauf kontinuierlich feststellt und die jeweils ermittelten Werte an einen Rechner (28) weitergibt, der über eine Positioniersteuerung das Strahlwerkzeug entsprechend dem aktuell vorhandenen Verlauf des Blechstoßes (Nahtverlauf) nachsteuert und daß in Durchlaufrichtung (XX) der miteinander zu verschweißenden Blechtafeln (1, 2) zwei Nahtfolgesensoren (30, 31) vorgesehen sind, die im Abstand vom Schweißfokus (19) fortlaufend die Abweichung der aktuell durchlaufenden Schweißnahtfuge von der theoretischen Bewegungsrichtung an den Rechner (28) übermitteln.

2. Verfahren nach Anspruch 2, **dadurch gekennzeichnet,** daß die Leistung des Schweißstrahls, die erforderliche Kühlleistung für den Schweißprozeß, die Fokuslage des Schweißstrahls un die Schweißgeschwindigkeit über die Nahtfolgesensorik (27) und einen Regelkreis ununterbrochen geregelt und die dafür erforderlichen Zustellbewegungen gesteuert werden.

3. Vorrichtung zum Durchführen des Verfahrens nach Anspruch 1 oder 2 mit mindestens zwei Transportbahnen für zwei miteinander zu verschweißende Blechtafeln (1, 2), einem zwischen diesen auf der Mitte (18) der theoretischen Schweißfuge angeordneten, sich in Richtung der Schweißlinie (18) erstreckenden starren Lineal (17) als Anschlag für eine Masterplatine (1) und wenigstens zwei motorisch angetriebene Förderbahnen (5, 6) zum Fördern der Blechtafeln (1, 2) mit einem Auflegebereich (7) für die Blechtafeln (1, 2), einem Fügebereich (8) und einem Schweißbereich (9), mit einer Schweißvorrichtung (23), der ein Strahlwerkzeug (Elektronenstrahlwerkzeug, Laserschweißwerkzeug) zugeordnet ist, Transportmitteln zum Transportieren der Masterplatine (1) gegen die eine Seite des starren Lineals (17), Druckrollen (14, 35) für die Masterplatine (1) bzw. die Slaveplatine (2) und wenigstens je einem starren Mitnehmer im Füge- und Schweißbereich (8 bzw. 9) zum Transportieren der Blechtafeln (1, 2), **gekennzeichnet durch** eine Nahtfolgesensorik (27), die den Nahtverlauf kontinuierlich feststellt und die jeweils ermittelten Werte an einen Rechner (28) weitergibt, der über eine Positioniersteuerung das Strahlwerkzeug entsprechend dem aktuell vorhandenen Verlauf des Blechstoßes (Nahtverlauf) nachsteuert, in Durchlaufrichtung (xx) der zu verschweißenden Blechtafeln (1, 2) vorgesehene zwei Nahtfolgesensoren (30, 31), die im Abstand vom Schweißfokus (19) fortlaufend die Abweichung der aktuell durchlaufenden Schweißnahtfuge von der theoretischen Bewegungsrichtung an den Rechner (28) übermitteln und eine Positioniervorrichtung zum Verstellen des Strahlwerkzeuges in vertikaler Richtung (V - T) und in wenigstens einer dazu orthogonal und orthogonal zur Durchlaufrichtung (XX) der Blechtafeln (1, 2) verlaufenden Ebenen (C - D) als Y-Achse.

4. Vorrichtung nach Anspruch 3, **dadurch gekennzeichnet,** daß die Förderbahn (5) im Auflegebereich (7) Magnetrollen (11) für die Masterplatte (1) aufweist, deren Drehachse einen spitzen Winkel α mit der Durchführung (XX) einschließt, während der Slaveplatine (2) Magnetbänder (15) und/oder Magnetrollen im Auflegebereich (7) zugeordnet sind, und daß sowohl der Masterplatine (1) als auch der Slaveplatine (2) jeweils eine Mitnehmerschleppkette (14 bzw. 34) zugeordnet sind, deren starrer Mitnehmer gegen die in Durchlaufrichtung (XX) hinten liegende Seite zur Anlage gelangt, und daß im Fügebereich (8) auch der Masterplatine (1) Magnetbänder (12) zugeordnet sind.

5. Vorrichtung nach Anspruch3 oder 4, **dadurch gekennzeichnet,** daß die Schweißfuge an dem in Durchlaufrichtung (XX) der Blechtafel (1, 2) liegenden Anfang des Fügebereichs (8) etwa 10 bis 60 mm beträgt.

6. Vorrichtung nach Anspruch 5, **dadurch gekennzeichnet,** daß die Schweißvorrichtung (23) ein Portal (24) aufweist, das sämtliche Transportbahnen von oben und auf zwei gegenüberliegenden Seiten mit Abstand übergreift und daß das Strahlwerkzeug und die Positioniervorrichtung an dem Portal (24) angeordnet sind.

7. Vorrichtung nach Anspruch 3 oder einem der folgenden, **dadurch gekennzeichnet,** daß die Sensorik (27) an der Schweißvorrichtung (23) angeordnet und mit dieser gemeinsam beweglich ist.

8. Vorrichtung nach Anspruch 7, **dadurch gekennzeichnet,** daß die Sensorik (27) zwei in Durchlaufrichtung (XX) mit Abstand hintereinander angeordnete Sensorfenster aufweist und daß auf der der Sensorik (27) in Durchlaufrichtung (XX) gegenüberliegenden Seite des Schweißfokus (19) eine Kühlvorrichtung (25) angeordnet ist, die das Kühlmittel zum Schweißfokus (19) hinleitet.

9. Vorrichtung nach Anspruch 3 oder einem der folgenden, **dadurch gekennzeichnet,** daß die Haltekraft der Druckrollen (14, 34) einstellbar ist.

**Claims**

1. Continuous butt-welding process for metal sheets (1, 2), in particular for building bodies in the car industry by beam welding (electron beam welding, laser beam welding or similar welding methods) wherein the two metal sheets (1, 2) to be welded together are placed on the feed area (7), laid down and subsequently forwarded with one of these metals sheets serving as master sheet which is positioned against a straight guide (17) coinciding with the centerline of the theoretical welding line (18) caused by a resulting advance movement while the second metal sheet (2) serving as "slave sheet" is likewise forwarded in feed direction (XX), the transport speed of the master sheet (1) and the slave sheet (2) being coordinated electronically with each other so that at the end of or immediately after having left the straight guide (17) the master sheet (1) is locked by forces acting from above for the purpose of ensuring attainment of directional precision, while the slave sheet (2) is forced against the longitudinal side of the aligned and locked master sheet (1) with its movement being delayed by at least one of the forces acting from above bringing together the longitudinal sides of the master sheet (1) and the slave sheet (2) to be welded together into the relative position towards each other with the two metal sheets (1, 2) subsequently being moved synchronously, **characterized in that** the metal sheets (1, 2) moving synchronously are forwarded to seam position sensors (27) which continuously measures the seam positions and forwards the measured values to a computer equipped with a positional control to reposition the welding tool to the actual run of the abutted seam and that two seam position sensors (30, 31) are provided to be positioned in feed direction (XX) of the metals sheets (1, 2) to be welded together continuously transmitting the deviation of the welding seam presently passing from the theoretical direction of movement measured in a distance from the weld focus (19) to the computer (28).

2. A process in accordance with Claim 1, **characterized in that** the requisite power of the welding beam, the requisite cooling power of the cooling device for the welding process, the requisite position of the weld focus of the weld beam, and the weld speed are continuously controlled via the seam position sensors (27) and an installed control circuit while the requisite positioning movements are effected thereby.

3. A device for executing the process in accordance with Claim 1 or 2, with at least two transport paths for two metal sheets (1, 2) to be welded together, a straight guide (17) positioned between these two sheets on the centerline (18) of the theoretical welding seam expanding in the direction of the welding line (18) and serving to align the master sheet (19) and with at least two motor-driven transport paths (5, 6) to transport the metal sheets (1, 2), an abutting area (8) and a welding area (9) with a welding device (23) which a welding tool (electron beam welding tool, laser beam welding tool) is assigned to, transport means for transporting the master sheet (1) against one side of the straight guide (17), pressure rollers (14, 35) for the master sheet (1) and/or the slave sheet (2) and with at least one rigid drag element each for the abutting area (8) and the welding area (9) for transporting the metal sheets (1, 2), **characterized in that** the seam position sensors (27) which continuously measure the run of the abutted seams and which transmit the measured values to a computer (28) equipped with a positional control to reposition the welding tool to the actual run of the abutted seam and with two seam position sensors (30, 31) provided in feed direction (XX) of the metal sheets (1, 2) to be welded together continuously transmitting the deviation of the welding seam presently passing from the theoretical direction of movement measured in a distance from the weld focus (19) to the computer (28) and with a positioning device for adjusting the welding tool in vertical direction (V - T) and in at least one level (C - D) as a Y-axis extending orthogonally towards the welding device and towards the feed direction (XX) of the metal sheets (1, 2).

4. A device in accordance with Claim 3, **characterized in that** the transport path (5) includes magnetic rollers (11) arranged in the feed area (7) for the master sheet (1) whose axes of rotation run under an acute angle ($\alpha$) to the feed direction (XX), whereas magnetic strips (15) and/or magnetic rollers arranged in the feed area (7) are assigned to the slave sheet (2) and that both the master sheet (1) and the slave sheet (2) are equipped with a drag chain (14, 34) with rigid drag elements engageable against a rear side moving against the feed direction (XX), the master sheet (1) being likewise equipped with magnetic strips (12) in the abutting area (8).

5. A device in accordance with Claim 3 or 4, **characterized in that** at the start of the abutting area (8), in feed direction (XX) of the metal sheet (1, 2), the weld seam has a magnitude of approx. 10 to 60 mm.

6. A device in accordance with Claim 5, **characterized in that** the welding means (23) includes a gate (24) extending at a distance over and on two opposite sides of the all the transport paths, said beam welding tool and said positioning device being arranged on said gate (24).

7. A device in accordance with Claim 3 or one of the following claims, **characterized in that** the sensor system (27) is arranged on the welding means (23) and can be moved together with said welding means.

8. A device in accordance with Claim 7 or one of the following claims, **characterized in that** the sensor system (27) is fitted with two sensor windows arranged at a spaced distance behind one another in feed direction (XX) and a cooling device is provided for directing the coolant to the weld focus (19), said cooling device being arranged on a side of said feed direction (XX) opposite to the sensor system (27).

9. A device in accordance with Claim 3 or one of the following claims, **characterized in that** the retaining force of said pressure rollers (14, 34) is adjustable.

**Revendications**

1. Procédé de soudage bord à bord en continu de feuilles de tôles (1, 2), notamment pour la construction de carrosseries dans l'industrie automobile au moyen du soudage par rayonnement - soudage par faisceaux d'électrons, soudage par faisceaux laser ou autres -, selon lequel les feuilles de tôles (1, 2) à assembler par soudage sont amenées sur la zone d'alimentation (7) où elles sont déposées et d'où elles sont ensuite transportées plus loin, une des deux feuilles de tôles (1) servant de platine maîtresse qui est dirigée par un mouvement d'avance résultant contre une règle (17) rigide située au centre de la ligne de soudage (18) théorique dans le sens de cette ligne de soudage théorique (18) alors que la deuxième feuille de tôle (2) se présentant sous forme de « platine esclave » est également transportée plus loin dans le sens de passe XX, la vitesse de transport de la platine maîtresse (1) et celle de la platine esclave (2) étant alignées électroniquement l'une à l'autre, suite à quoi la platine maîtresse (1) est bloquée à la fin ou immédiatement après avoir quitté la règle (17) par des forces appliquées en haut dans le but d'assurer le mouvement rectiligne qu'elle a atteint alors que la platine esclave (2) est entraînée contre le grand côté de la platine maîtresse (1) alignée et bloquée et que, d'autre part, son mouvement est ralenti par au moins une force appliquée en haut jusqu'à ce que les bords longitudinaux de la platine maîtresse (1) et de la platine esclave (2) à assembler par soudage soient dans la position relative souhaitée l'un par rapport à l'autre, et les deux feuilles de tôles (1, 2) se déplaçant ainsi en synchronisme, **caractérisé en ce que** les feuilles de tôles (1, 2) qui se déplacent en synchronisme sont affectées à un système sensoriel de suivi de la soudure (27) qui constate continuellement le tracé de la soudure et qui transmet les valeurs respectivement saisies à un ordinateur (28), qui pilote l'outil de rayonnement en fonction du tracé actuel du joint de tôle (tracé de la soudure) via une commande de positionnement et en ce que deux capteurs de suivi de la soudure (30, 31) sont prévus dans le sens de passe X des feuilles de tôles (1, 2) à assembler par soudage, lesdits capteurs, situés à une certaine distance du point de soudage (19),

transmettant continuellement à l'ordinateur (28) l'écart du joint de soudure continu actuel par rapport au sens de mouvement théorique.

2. Procédé selon la revendication 2?, **caractérisé en ce que** la puissance du faisceau de soudage, le rendement calorifique nécessaire pour le processus de soudage, la position du point du faisceau de soudage et la vitesse de soudage sont réglés en continu via le système sensoriel de suivi de la soudure (27) et une boucle d'asservissement et que les mouvements d'avance nécessaires commandés.

3. Dispositif pour la réalisation du procédé selon la revendication 1 ou 2 avec au moins deux voies de transport pour deux feuilles de tôles (1, 2) à assembler par soudage, une règle (17) rigide disposée entre lesdltes feuilles de tôles au centre (18) du joint de soudure théorique et s'étendant dans le sens de la ligne de soudage (18) et servant de butée pour une platine maîtresse (1) et au moins deux voies de convoyage (5, 6) motorisées pour l'acheminement des feuilles de tôles (1, 2) avec une zone d'alimentation (7) pour les feuilles de tôles (1, 2), une zone de jointement (8) et une zone de soudage (9), avec une installation de soudage (23) à laquelle est affecté un outil de rayonnement (soudage par faisceaux d'électrons, soudage par faisceaux laser), des moyens de transport pour le transport de la platine maîtresse (1) et de la platine esclave (2) et au moins un entraîneur rigide dans la zone de jointement et un dans la zone de soudage (8 et 9) pour le transport des feuilles de tôles (1, 2), **caractérisé par** un système sensoriel de suivi de la soudure (27) qui constate continuellement le tracé de la soudure et transmet les valeurs respectivement saisies à un ordinateur (28) qui pilote l'outil de rayonnement en fonction du tracé actuel du joint de tôle (tracé de la soudure) via une commande de positionnement, par deux capteurs de suivi de la soudure (30, 31) prévus dans le sens de passe (XX) des feuilles de tôles (1, 2) à assembler par soudage, lesdits capteurs situés à une certaine distance du point de soudage (19) transmettant continuellement à l'ordinateur (28) l'écart du joint de soudure continu actuel par rapport au sens de mouvement théorique et un dispositif de positionnement pour le réglage de l'outil de rayonnement dans le sens vertical (V - T) et au moins dans un plan (C - D) orthogonal à celui-ci et orthogonal au sens de passe (XX) des feuilles de tôles (1,2) en tant qu'axe Y.

4. Dispositif selon la revendication 3, **caractérisé en ce que** la voie de convoyage (5) possède des galets magnétiques (11) pour la platine maîtresse (1) dans la zone d'alimentation (7), dont l'axe de rotation englobe un angle saillant $\alpha$ avec le passage (XX) alors que des bandes magnétiques (15) et/ou des galets magnétiques sont affectés à la platine esclave (2) dans la zone d'alimentation (7), et qu'une chaîne d'entraînement à raclettes (14 et 34) est affectée respectivement aussi bien à la platine maîtresse (1) qu'à la platine esclave (2), les entraîneurs rigides de ladite chaîne venant appuyer contre le côté arrière dans le sens de passe (XX), et que des bandes magnétiques (12) sont également affectées à la platine maîtresse (1) dans la zone de jointement.

5. Dispositif selon la revendication 3 ou 4, **caractérisé en ce que** le joint de soudage est d'environ 10 à 60 mm au début de la zone de jointement (8) situé dans le sens de passe (XX) des feuilles de tôles (1, 2).

6. Dispositif selon la revendication 5, **caractérisé en ce que** l'installation de soudage (23) possède un portique (24) qui chevauche à une certaine distance l'ensemble des voies de transport du haut et sur deux côtés opposés et que l'outil de rayonnement et le dispositif de positionnement sont installés sur le portique (24).

7. Dispositif selon la revendication 3 ou l'une des suivantes, **caractérisé en ce que** le système sensoriel (27) est installé sur l'installation de soudage (23) et qu'il se déplace avec elle.

8. Dispositif selon la revendication 7, **caractérisé en ce que** le système sensoriel (27) possède deux fenêtres de capteur disposées l'une derrière l'autre à une certaine distance dans le sens de la passe (XX) et qu'un dispositif de refroidissement (25) transportant le produit de refroidissement au point de soudage (19) est installé sur le côté du point de soudage (19) opposé au système sensoriel (27) dans le sens de la passe (XX).

9. Dispositif selon la revendication 3 ou l'une des suivantes, **caractérisé en ce que** la force de maintien des rouleaux presseurs (13, 14) est réglable.

Fig.1

EP 0 817 698 B1

EP 0 817 698 B1

11   1   5

34

17

XX→

18

20

15   2   4   3   16   6

Fig.2

Fig.3

23

C-D
⊗

27

19

XX

Fig. 4

Fig.5

EP 0 817 698 B1

Fig.6

Fig.7

EP 0 817 698 B1

19

LASER-STRAHL

24

2

1

Fig. 8

Fig. 9

Fig.10

Fig.11